# EUROPÄISCHE PATENTSCHRIFT

(11) **EP 0 690 023 B1**
(45) Veröffentlichungstag und Bekanntmachung des Hinweises auf die Patenterteilung: **12.05.1999**
(21) Anmeldenummer: 95109422.6
(22) Anmeldetag: 19.06.1995
(51) Int. Cl.: C01B 33/16, C04B 30/00

(54) **Verfahren zur Herstellung von Xerogelen**
Process for preparation of xerogels
Procédé de préparation de xérogels

(30) Priorität: 30.06.1994 DE 4422912
(43) Veröffentlichungstag der Anmeldung: 03.01.1996
(73) Patentinhaber: CABOT CORPORATION, Boston, MA 02109 (US)
(72) Erfinder: Jansen, Rolf-Michael, Dr., D-65799 Kelkheim (DE); Zimmermann, Andreas, Dr., D-64347 Griesheim (DE)
(74) Vertreter: Luderschmidt, Schüler & Partner GbR

(56) Entgegenhaltungen:
- GB-A- 682 574
- US-A- 3 801 705
- CHEMISCHES ZENTRALBLATT, Nr. 20, 1965, Berlin, DE; Zusammenfassung Nr. 2187; * Zusammenfassung *
- CHEMICAL ABSTRACTS, vol. 81, no. 14, 7.Oktober 1974 Columbus, Ohio, US; abstract no. 82740a, Seite 328;

## Beschreibung

Die Erfindung betrifft ein Verfahren zur Herstellung modifizierter SiO₂-Gele, im folgenden "Xerogele" genannt.

Aerogele im weiteren Sinn, d.h. im Sinne von "Gel mit Luft als Dispersionsmittel", werden durch Trocknung eines geeigneten Gels hergestellt. Unter den Begriff "Aerogel" in diesem Sinne, fallen Aerogele im engeren Sinn, Xerogele und Kryogele. Dabei wird ein getrocknetes Gel als Aerogel im engeren Sinn bezeichnet, wenn die Flüssigkeit des Gels bei Temperaturen oberhalb der kritischen Temperatur und ausgehend von Drücken oberhalb des kritischen Druckes weitestgehend entfernt wird. Wird die Flüssigkeit des Gels dagegen unterkritisch, beispielsweise unter Bildung einer Flüssig-Dampf-Grenzphase entfernt, dann bezeichnet, man das entstandene Gel als Xerogel.

Die hergestellten Xerogele sind den üblichen SiO₂-Aerogelen verwandt, aber nicht mit ihnen identisch.

SiO₂-Aerogele sind dafür bekannt, daß sie hervorragende Isolationswirkung besitzen. Sie werden beispielsweise durch saure Hydrolyse von Tetraethylorthosilikat in Ethanol hergestellt. Bei der Hydrolyse entsteht ein Gel, dessen Struktur durch die Temperatur, den pH-Wert und die Dauer des Gelierprozesses bestimmt ist. Jedoch kollabiert die Gelstruktur im allgemeinen bei der Trocknung der nassen Gele, da die bei der Trocknung auftretenden Kapillarkräfte extrem groß sind. Der Gelkollaps kann dadurch verhindert werden, daß die Trocknung oberhalb der kritischen Temperatur und des kritischen Druckes des Lösungsmittels durchgeführt wird. Da in diesem Bereich die Phasengrenze flüssig/gasförmig verschwindet, entfallen auch die Kapillarkräfte und das Gel verändert sich während der Trocknung nicht, d. h. es tritt auch kein Schrumpfen des Gels während der Trocknung auf. Auf dieser Trocknungstechnik basierende Herstellverfahren sind, z. B. aus der EP-A-0 396 076 oder der WO 92 03378 bekannt. Diese Technik erfordert aber, beispielsweise bei der Verwendung von Ethanol, eine Temperatur über 240°C und Drücke über 40 bar. Der Austausch von Ethanol gegen CO₂ vor der Trocknung erniedrigt zwar die Trocknungstemperatur auf ca. 40°C, der benötigte Druck liegt aber dann bei 80 bar.

Aus der GB-A-682 574 ist es bekannt, ein durch Trialkyl-Alkoxy-Silan modifiziertes Kieselsäuregel dadurch herzustellen, daß durch Neutralisation von Wasserglas ein Hydrogel gewonnen und anschließend elektrolytfrei gewaschen wird, das Hydrogel z.B. durch Behandeln mit Aceton und gegebenenfalls weiterem Lösungsmittelaustausch in ein Organogel übergeführt wird, das Organogel in Gegenwart des Silans gealtert und schließlich getrocknet wird.

In der US-A-3,801,705 wird ein Verfahren offenbart, bei dem man ausgehend von gefällten Hydrogelen, unter sorgfältiger pH-Kontrolle, gegebenenfalls Waschen oder Ionentauschen des Gels und Temperaturaltern, sowie nach extraktiver Destillation mit Hilfe eines azeotropbildenden Lösungsmittels und Trocknen ein Xerogel herstellt.

Es wurde nun gefunden, daß man SiO₂-Gele bei unterkritischen Bedingungen trocknen kann, wenn man sie vor der Trocknung mit einem Silylierungsmittel umsetzt. Die erhaltenen Produkte werden im folgenden als "Xerogele" bezeichnet. Sie sind hervorragende Wärmeisolationsmittel.

Gegenstand der Erfindung ist ein Verfahren zur Herstellung von Xerogelen, das dadurch gekennzeichnet ist, daß man
a) eine wäßrige Wasserglaslösung mit Hilfe eines sauren Ionentauscherharzes oder einer Mineralsäure auf einen pH-Wert ≤ 3,0, vorzugsweise ≤ 2,2 bringt,
b) die dabei entstandene Kieselsäure durch Zugabe einer Base zu einem SiO₂-Gel polykondensiert und, falls in Schritt a) eine Mineralsäure benutzt wurde, das Gel mit Wasser gegebenenfalls elektrolytfrei wäscht,
c) aus dem in Schritt b) erhaltenen Gel das Wasser durch extraktive Destillation mit einem organischen Lösungsmittel, das mit Wasser ein sich beim Abkühlen in zwei Phasen trennendes Azeotrop bildet, solange entfernt, bis der Wassergehalt des Gels ≤ 5 Gew.-% ist,
d) das in Schritt c) erhaltene Gel mit einem Silylierungsmittel der Formeln R¹₄₋ₙSiClₙ oder R¹₄₋ₙSi(OR²)ₙ mit n = 1 bis 3, wobei R¹ und R² unabhängig voneinander C₁-C₆-Alkyl, Cyclohexyl oder Phenyl sind, oder einem Silazan umsetzt,
e) das in Schritt d) erhaltene silylierte Gel bei Drücken und Temperaturen trocknet, die unter dem kritischen Druck und/oder der kritischen Temperatur des in Schritt c) verwendeten organischen Lösungsmittels liegen.

In Schritt a) wird vorzugsweise ein saures Ionentauscherharz eingesetzt; dabei sind vor allem solche geeignet, die Sulfonsäuregruppen enthalten. Falls man Mineralsäuren einsetzt, sind vor allem Salzsäure und Schwefelsäure geeignet. Als Wasserglas wird im allgemeinen Natrium- und/oder Kaliumwasserglas verwendet. Die Konzentration des Wasserglases liegt dabei vorzugsweise im Bereich von 1 bis 20 Gew.-% und besonders bevorzugt im Bereich von 5 bis 12 Gew.-%.

In Schritt b) wird als Base vorzugsweise NH₄OH, NaOH, KOH, Al(OH)₃ und/oder kolloidale Kieselsäure eingesetzt. Falls in Schritt a) eine Mineralsäure verwendet wurde, wird das mit Hilfe der Base erzeugte SiO₂-Gel gegebenenfalls mit Wasser elektrolytfrei gewaschen; vorzugsweise wird dabei solange gewaschen, bis das ablaufende Waschwasser dieselbe elektrische Leitfähigkeit hat wie entmineralisiertes Wasser.

Vor Schritt c) läßt man das Gel vorzugsweise altern, und zwar im allgemeinen bei 0 bis 150°C, vorzugsweise bei 80 bis 130°C, und einem pH-Wert von 4 bis 11, vorzugsweise 4 bis 9. Die Zeit dafür beträgt im allgemeinen 10 Sekunden bis 48 Stunden, vorzugsweise 10 Sekunden bis 5 Stunden.

In Schritt c) wird das in dem Gel enthaltene Wasser durch extraktive Destillation mit einem organischen Lösungsmittel solange abdestilliert, bis der Wassergehalt des Gels maximal 5 Gew.-%, vorzugsweise ≦ 2 Gew.-% ist. Das eingesetzte Lösungsmittel muß mit dem Wasser ein Azeotrop bilden, das sich beim Abkühlen in zwei flüssige Phasen trennt, eine Wasserphase und eine Lösungsmittelphase. Als Lösungsmittel sind beispielsweise Toluol, Di-n-butylether oder Methylisobutylketon geeignet. Vorzugsweise verwendet man Toluol.

Die beim Abkühlen des Azeotrops entstehende Lösungsmittelphase kann in den Prozeß zurückgeführt werden.

Die Schritte a) bis c) werden im allgemeinen bei einer Temperatur zwischen dem Gefrierpunkt der Lösung und den Siedepunkt des Lösungsmittels durchgeführt.

In Schritt d) wird das lösungsmittelhaltige Gel mit einem Silylierungsmittel umgesetzt. Als Silylierungsmittel werden im allgemeinen Silane der Formeln R¹₄₋ₙSiClₙ oder R¹₄₋ₙSi(OR²)ₙ mit n = 1 bis 3 eingesetzt, wobei R¹ und R² unabhängig voneinander C₁-C₆-Alkyl, Cyclohexyl oder Phenyl sind. Auch Silazane sind geeignet. Vorzugsweise verwendet man Mono-, Di- oder Trimethylchlorsilan, Trimethylmethoxysilan oder Hexamethyldisilazan. Die Umsetzung wird im allgemeinen bei 20 bis 100°C, vorzugsweise 30 bis 70°C durchgeführt, wenn nötig in einem Lösungsmittel, wie Toluol, Aceton, n-Hexan, n-Heptan, Di-n-butylether, i-Propanol oder Methylisobutylketon. Die Silylierung kann gegebenenfalls auch unter Druck, vorzugsweise bis 25 bar, durchgeführt werden. Gegebenenfalls kann das silylierte Gel vor der Trocknung noch gewaschen werden.

In Schritt e) wird das silylierte Gel bei Temperaturen von -30 bis zum Siedepunkt des Lösungsmittels, vorzugsweise von -30 bis 200°C, besonders bevorzugt von 0 bis 150°C, getrocknet. Die bei der Trocknung angewandten Drücke liegen vorzugsweise bei 0,001 bis 20 bar, besonders bevorzugt bei 0,01 bis 5 bar. Die Trocknung wird im allgemeinen so lange fortgeführt, bis das Gel einen Lösungsmittel-Restgehalt von weniger als 0,1 Gew.-% hat.

Zur Erzielung besonderer thermischer Eigenschaften kann es vorteilhaft sein, wenn das Xerogel zusätzlich noch IR-Trübungsmittel (wie z.B. Ruß, Titandioxid, Eisenoxide und Zirkondioxid) enthält. Diese IR-Trübungsmittel werden dabei vorzugsweise vor Schritt b) zugegeben.

Das erfindungsgemäße Verfahren soll an einem Beispiel verdeutlicht werden.

### Beispiel

1 l einer Natriumwasserglaslösung (mit einem Gehalt von 6 Gew.-% SiO₂ und einem Na₂O:SiO₂-Verhältnis von 2:3) wurde über eine Kolonne (Durchmesser 50 mm, Länge 300 mm) geleitet, die mit 0,5 l eines sauren Ionentauscherharzes (Styroldivinylbenzolcopolymer mit Sulfonsäuregruppen, handelsüblich unter dem Namen ®Duolite C20) gefüllt ist. Der pH der abfließenden Lösung betrug 1,5. Anschließend wurde die Lösung mit 1-molarer NH₄OH-Lösung auf einen pH von 5,6 eingestellt. Danach wurde das entstandene Gel noch 24 Stunden bei 50°C gealtert und anschließend das Wasser mit Hilfe von 3 l Toluol in einem Extraktionsgefäß mit Wasserabscheider bei etwa 100°C extrahiert. Die Extraktion wurde beendet, nachdem sich die errechnete Menge Wasser (ca. 920 ml) abgeschieden hatte. Anschließend wurde das toluolhaltige Gel mit Trimethylchlorsilan (TMCS) 12 Stunden lang bei 50°C silyliert (0,05 g TMCS pro Gramm toluolhaltiges Gel). Die Trocknung des Gels erfolgte in einem mit N₂ gespülten Trockner unter Normaldruck (6 Stunden bei 40°C, dann 2 Stunden bei 50°C und 12 Stunden bei 150°C). Das so erhaltene, transparente Xerogel hatte eine Dichte von 0,12 g/cm³. Die spezifische Oberfläche nach BET lag bei 920 m²/g. Der λ-Wert lag bei 0,016 W/mK.

Die Wärmeleitfähigkeit wurde mit einer Heizdrahtmethode (s. z.B. O. Nielsson, G. Rüschenpöhler, J. Groß, J. Fricke, High-Temperatures-High-Pressures, Vol. 21, 267-274 (1989)) gemessen.

## Patentansprüche

1. Verfahren zur Herstellung von Xerogelen, dadurch gekennzeichnet, daß man
a) eine wäßrige Wasserglaslösung mit Hilfe eines sauren Ionentauscherharzes oder einer Mineralsäure auf einen pH-Wert ≤ 3,0 bringt,
b) die dabei entstandene Kieselsäure durch Zugabe einer Base zu einem SiO₂-Gel polykondensiert und, falls in Schritt a) eine Mineralsäure benutzt wurde, das Gel mit Wasser gegebenenfalls elektrolytfrei wäscht,
c) aus dem in Schritt b) erhaltenen Gel das Wasser durch extraktive Destillation mit einem organischen Lösungsmittel, das mit Wasser ein sich beim Abkühlen in zwei Phasen trennendes Azeotrop bildet, solange entfernt, bis der Wassergehalt des Gels ≤ 5 Gew.-% ist,
d) das in Schritt c) erhaltene Gel mit einem Silylierungsmittel der Formeln R¹₄₋ₙSiClₙ oder R¹₄₋ₙSi(OR²)ₙ mit n = 1 bis 3, wobei R¹ und R² unabhängig voneinander C₁-C₆-Alkyl, Cyclohexyl oder Phenyl sind, oder einem Silazan umsetzt,
e) das in Schritt d) erhaltene silylierte Gel bei Drücken und Temperaturen trocknet, die unter dem kritischen Druck und/oder der kritischen Temperatur des in Schritt c) verwendeten organischen Lösungsmittels liegen.

2. Verfahren nach Anspruch 1, dadurch gekennzeichnet, daß man in Schritt a) ein saures Ionentauscherharz einsetzt.

3. Verfahren nach Anspruch 1 oder 2, dadurch gekennzeichnet, daß man in Schritt b) als Base NH₄OH, NaOH, KOH, Al(OH)₃ und/oder kolloidale Kieselsäure einsetzt.

4. Verfahren nach mindestens einem der Ansprüche 1 bis 3, dadurch gekennzeichnet, daß man das in Schritt b) erhaltene SiO₂-Gel bei 0 bis 150°C und einem pH-Wert von 4 bis 11 für eine Dauer von 10 Sekunden bis 48 Stunden altern läßt, bevor man in Schritt c) das Wasser entfernt.

5. Verfahren nach mindestens einem der Ansprüche 1 bis 4, dadurch gekennzeichnet, daß man in Schritt c) als organisches Lösungsmittel Toluol, Di-n-butylether oder Methylisobutylketon einsetzt.

6. Verfahren nach mindestens einem der Ansprüche 1 bis 5, dadurch gekennzeichnet, daß man in Schritt d) als Silylierungsmittel Mono-, Di- oder Trimethylchlorsilan, Trimethylmethoxysilan oder Hexamethyldisilazan einsetzt.

7. Verfahren nach einem der Ansprüche 1 bis 6, dadurch gekennzeichnet, daß man in Schritt e) das silylierte Gel bei -30 bis 200°C trocknet.

8. Verfahren nach einem der Ansprüche 1 bis 7, dadurch gekennzeichnet, daß man in Schritt e) das silylierte Gel bei 0,001 bis 20 bar trocknet.

## Claims

1. A method of producing xerogels, characterised in that
a) an aqueous water glass solution is brought to a pH value ≤ of 3.0,by means of an acid ion exchange resin or a mineral acid,
b) the silicic acid resulting from this is polycondensed by the addition of a base to produce an SiO₂ gel in the event of step a) using a mineral acid which washes the gel possibly electrolyte-free with water,
c) out of the gel obtained in step b), the water is removed by extractive distillation with an organic solvent which, with water, forms an azeotrope which upon cooling separates into two phases until such time as the water content of the gel is ≤ 5% by weight,
d) the gel obtained in step c) is reacted with a silylating agent to the formulae R¹₄₋ₙSiClₙ or R¹₄₋ₙSi(OR²)ₙ in which n= 1 to 3, and in which R¹ and R² are independently of each other C₁-C₆alkyl, cyclohexyl or phenyl or a silazane,
e) the silylated gel obtained in step d) is dried under pressure and temperature which lie below the critical pressure and/or the critical temperature of the organic solvent used in step c).

2. A method according to claim 1, characterised in that an acid ion exchange resin is used in step a).

3. A method according to claim 1 or 2, characterised in that as a base NH₄OH, NaOH, KOH, Al(OH)₃ and/or colloidal silicic acid is used in step b).

4. A method according to at least one of claims 1 to 3, characterised in that the SiO₂ gel obtained in step b) is allowed to age at 0 to 150°C and at a pH value of 4 to 11 for a period of 10 seconds to 48 hours before the water is removed in step c).

5. A method according to at least one of claims 1 to 4, characterised in that in step c), toluene, di-n-butyl ether or methyl isobutyl ketone is used as the organic solvent.

6. A method according to at least one of claims 1 to 5, characterised in that in step d), the silylating agent used is mono-, di- or trimethyl chlorosilane, trimethyl methoxysilane or hexamethyl disilazane.

7. A method according to one of claims 1 to 6, characterised in that in step e) the silylated gel is dried at -30 to 200°C.

8. A method according to one of claims 1 to 7, characterised in that in step e), the silylated gel is dried at 0.001 to 20 bars.

## Revendications

1. Procédé de préparation de xérogels, caractérisé en ce que
a) l'on amène une solution aqueuse de verre soluble à l'aide d'une résine d'échange d'ions acide ou d'un acide minéral à une valeur de pH ≤ 3,0,
b) on polycondense l'acide silicique ainsi obtenu par ajout d'une base à un gel de SiO₂ et, si on a utilisé un acide minéral à l'étape a), on lave éventuellement le gel avec de l'eau pour éliminer tout électrolyte,
c) on élimine l'eau du gel obtenu à l'étape b) par distillation extractive avec un solvant organique, qui forme avec l'eau un azéotrope se séparant en deux phases lors du refroidissement, jusqu'à ce que la teneur en eau du gel soit ≤ 5% en poids,
d) on met à réagir le gel obtenu à l'étape c) avec un agent de silylation de formules R¹₄₋ₙSiClₙ ou R¹₄₋ₙSi(OR²)ₙ avec n = 1 à 3, dans lesquelles R¹ et R² sont indépendamment l'un de l'autre un groupe alkyle en C₁-C₆, cyclohexyle ou phényle, ou un silazane,
e) on sèche le gel silylé obtenu à l'étape d) à des pressions et des températures, qui sont situées au-dessous de la pression critique et/ou de la température critique du solvant organique utilisé à l'étape c).

2. Procédé selon la revendication 1, caractérisé en ce que l'on utilise une résine d'échange d'ions acide à l'étape a).

3. Procédé selon la revendication 1 ou 2, caractérisé en ce que l'on utilise comme base à l'étape b) NH₄OH, NaOH, KOH, Al(OH)₃ et/ou de l'acide silicique colloïdal.

4. Procédé selon au moins l'une des revendications 1 à 3, caractérisé en ce qu'on fait vieillir le gel de SiO₂ obtenu à l'étape b) de 0 à 150°C et à une valeur de pH de 4 à 11 pendant une durée de 10 secondes jusqu'à 48 heures, avant d'éliminer l'eau à l'étape c).

5. Procédé selon au moins l'une des revendications 1 à 4, caractérisé en ce qu'on utilise comme solvant organique à l'étape c) le toluène, l'éther n-butylique ou la méthylisobutylcétone.

6. Procédé selon au moins l'une des revendications 1 à 5, caractérisé en ce qu'on utilise comme agent de silylation à l'étape d) le mono, di ou triméthylchlorosilane, le triméthylméthoxysilane ou l'hexaméthyldisilazane.

7. Procédé selon au moins l'une des revendications 1 à 6, caractérisé en ce qu'on sèche le gel silylé à l'étape e) de -30 jusqu'à 200°C.

8. Procédé selon au moins l'une des revendications 1 à 7, caractérisé en ce qu'on sèche le gel silylé à l'étape e) de 0,001 jusqu'à 20 bar.
